# EUROPEAN PATENT SPECIFICATION

(11) **EP 2 520 842 B1**
(45) Date of publication and mention of the grant of the patent: **06.07.2022**
(21) Application number: 12166509.5
(22) Date of filing: 03.05.2012
(51) Int. Cl.: F16L 41/06, F16L 47/34

(54) **TOP-PIECE DEVICE WITH A RETROFITTABLE PRESSURE RELIEF VALVE FOR A PLASTIC PIPE**
AUFSATZVORRICHTUNG MIT EINEM NACHRÜSTBAREM DRUCKENTLASTUNGSVENTIL FÜR EIN KUNSTSTOFFROHR
DISPOSITIF DE BONBOUT AVEC SOUPAPE DE LIBÉRATION DE PRESSION ADAPTABLE POUR TUYAU EN PLASTIQUE

(30) Priority: 03.05.2011 NL 2006707; 27.05.2011 NL 2006858
(43) Date of publication of application: 07.11.2012
(73) Proprietor: Pipelife Nederland B.V., 1601 MA Enkhuizen (NL)
(72) Inventor: Guitoneau, Hans Edward, 1613 DH Grootebroek (NL); Scucces, Marcel Roger, 1461 DM Zuidoostbeemster (NL)
(74) Representative: Nederlandsch Octrooibureau

(56) References cited:
- EP-A1- 0 580 222
- EP-A2- 0 393 560
- DE-A1-102006 019 279
- DE-A1-102006 043 531

## Description

The invention relates to a top-piece device for a plastic pipe for transporting a fluid, comprising a saddle which can be fitted on the plastic pipe and a top piece which cooperates with the saddle, which top piece has a chamber with an outlet on the side which is to be turned towards the plastic pipe, an introduction non-return valve via which a tool can be introduced into the chamber, a gasket for sealing said tool with respect to the chamber, a closing means on that end of the chamber which is situated opposite the outlet, a pressure relief valve which is in an open position in the rest position and which can be brought to the closed position when a predetermined current force and/or a pressure difference across the pressure relief valve is exceeded, and a branch which is connected to the chamber.

Such a top-piece device is known, see for example documents DE102006043531 or EP0580222. With this known top-piece device, the pressure relief valve is situated in the branch which extends transversely with respect to the chamber and via which the drill tool has to be introduced. A drawback of this embodiment is that the pressure relief valve can only be fitted before the top-piece device is incorporated into the pipe network. The reason for this is that the branch becomes inaccessible as soon as the branch pipe is connected thereto, in case the connection has to be effected under pressure. Also, the pressure relief valve can only be fitted from one side, that is to say from the free end thereof, in the branch line. Consequently, special measures have to be taken in order to fix the pressure relief valve in the branch.

It is therefore an object of the invention to provide an improved top-piece device of the above-described type which allows a more flexible installation of the pressure relief valve. This object is achieved by the fact that the pressure relief valve is provided in the chamber and in that either the pressure relief valve is suspended directly from the closing means and the housing of the pressure relief valve has an external diameter which is greater than the internal diameter of the gasket, or the pressure relief valve is suspended from a piece of pipe which is connected to the closing means at one end and which supports the pressure relief valve at the other end and which piece of pipe has a nominal diameter which is greater than the internal diameter of the gasket.

An important advantage is the fact that the pressure relief valve can be fitted after the top-piece device has been placed on the plastic pipe. The end of the chamber which is situated opposite the end turned towards the plastic pipe can be made freely accessible to this end by removing the closure. In this case, the pressure in the plastic pipe can be maintained, because the introduction non-return valve ensures the sealing. Subsequently, the pressure relief valve can be introduced via the gasket. In this way, it is possible to retrofit existing service pipes with a pressure relief valve while only releasing a very limited amount of fluid.

According to the invention, the pressure relief valve is suspended from the closing means. With such an embodiment, the advantage is achieved that the pressure relief valve can be directly fitted while installing the closing means. The pressure relief valve is suspended from the closing means. This offers the advantage that the pressure relief valve can be directly fitted while installing the closing means. In this connection, a piece of pipe is preferably provided which is connected to the closing means at one end and which supports the pressure relief valve at the other end. By choosing a piece of pipe of the desired length, the pressure relief valve can be suspended in the chamber at a certain height.

Furthermore, the piece of pipe may have at least a lateral opening in its wall, and the pressure relief valve may be connected to the piece of pipe and may be sealed with respect to the chamber. Thus, the flow of fluid from the plastic pipe may flow via the pressure relief valve in the piece of pipe directly into the branch, in particular if the opening is situated at the location of the branch. In connection with sealing the top-piece device during installation of the pressure relief valve, the piece of pipe has a nominal diameter which is greater than the internal diameter of the gasket. If the pressure relief valve is suspended directly from the closing means, without the use of a piece of pipe, the pressure relief valve itself, such as the housing thereof, has an external diameter which is greater than the internal diameter of the gasket.

Furthermore, the piece of pipe and/or the pressure relief valve, such as the housing thereof, may have a constriction at the location of the gasket, which constriction has an external diameter which is smaller than the internal diameter of the gasket. This prevents the gasket from expanding due to being under constant pressure, and makes it possible to ensure that the satisfactory operation of the gasket is maintained.

The invention furthermore relates to an assembly, comprising a closing means and a pressure relief valve suspended from the closing means for use in the top-piece device as described above. In addition, a piece of pipe may be provided which extends between the closing means and the pressure relief valve.

The invention also relates to the combination of the assembly as described above and a pipe-shaped adaptor in which that end of the piece of pipe facing away from the pressure relief valve can be sealingly accommodated, which adaptor has a substantially constant cylindrical external shape with a diameter greater than the internal diameter of the gasket and is intended for introducing the assembly into the chamber or removing it therefrom. By means of such an adaptor, the assembly can be removed from the chamber in a safe manner. By using this adaptor between the inner wall of the chamber and the assembly, it is at least possible to prevent deformation of the introduction non-return valve which has been pushed open and which is usually made of flexible material.

The piece of pipe may have an external stop which faces downstream in such a manner that the one end of the adaptor can be fitted against the stop. Furthermore, the adaptor end which faces away from the pressure relief valve may have an external collar which can be fitted against that boundary of the chamber which faces away from the pressure relief valve. By means of this collar, the adaptor can be fixed in the correct position with respect to the chamber.

The collar of the adaptor has a recess which can be brought to the same level as that boundary of the chamber facing away from the pressure relief valve; in this case the piece of pipe is provided with a support which can be fitted against said recess and said boundary of the chamber. Furthermore, that end of the piece of pipe facing away from the pressure relief valve may have a sealing which can be made to cooperate with the internal wall of the adaptor. If the piece of pipe has at least one lateral opening in its wall, this can be accommodated in the adaptor in such a manner that every hole in the piece of pipe is covered by the adaptor.

In addition, the invention relates to a method of fitting a top-piece device as described above to a plastic pipe using said assembly, comprising the following steps:
- fitting the saddle and the top piece on the plastic pipe,
- introducing a drill tool in the top piece by opening the introduction non-return valve, which drill tool is sealed with respect to the gasket,
- making a hole in the plastic pipe by means of the drill tool,
- removing the drill tool from the top piece after the hole has been made while closing the introduction non-return valve,
- introducing the assembly while opening the introduction non-return valve, which assembly is sealed with respect to the gasket,
- attaching the assembly to the top piece.

Preferably, provision is made for the step that the constriction of the piece of pipe is fitted at the location of the gasket, in such a manner that the gasket is in a stress-free state after the assembly has been fitted.

The invention furthermore relates to a method for removing the assembly from the chamber using the above-described combination, comprising the following steps:
- introducing the adaptor into the chamber and around the assembly while displacing the open introduction non-return valve, which adaptor is sealed with respect to the gasket,
- withdrawing the assembly from the adaptor,
- subsequently removing the adaptor from the chamber.

Below, the invention will be explained in more detail with reference to an exemplary embodiment illustrated in the figures, in which:
Fig. 1 shows the top-piece device, fitted on a plastic pipe before a hole is made therein;
Fig. 1a shows the view of Fig. 1 according to Ia;
Fig. 1b shows the view of Fig. 1 according to Ib;
Fig. 2 shows the top-piece device with a drill tool introduced therein;
Fig. 3 shows the top-piece device after a hole has been made therein and the pressure relief valve has been fitted;
Fig. 4 shows a variant of the top piece in cross section and in two different positions;
Fig. 5 shows the view along V in Fig. 4;
Fig. 6 shows a further variant of the top piece.

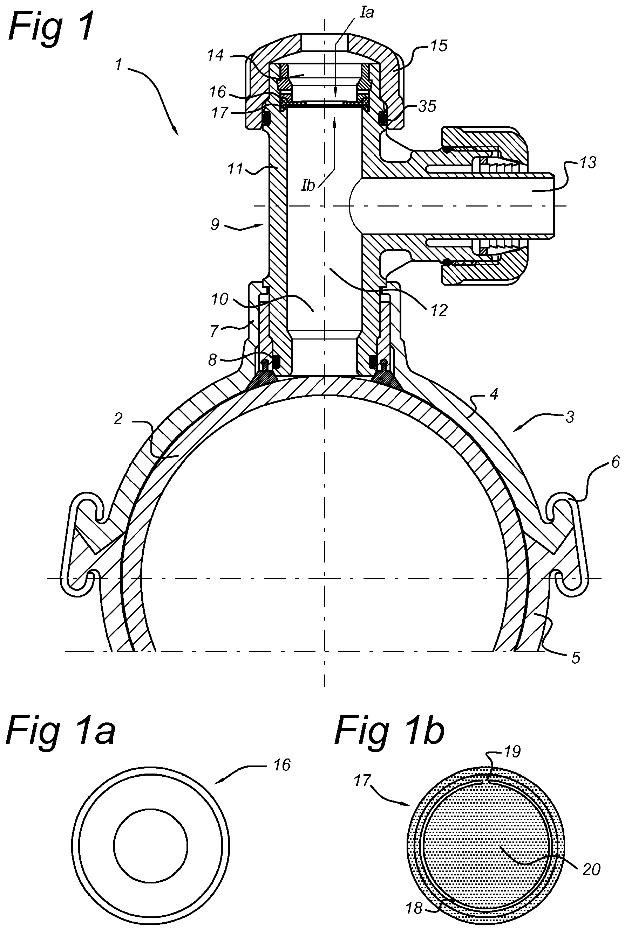

Fig. 1 shows the top-piece device 1 which is fitted on a plastic pipe 2. The top-piece device 1 consists of the saddle 3 and the top piece which is denoted overall by reference numeral 9. The saddle 3 consists of an upper ring part 4 and the bottom ring part 5 which are clamped around the plastic pipe 2 by means of the clamps 6. The upper ring part 4 has a collar 7 containing a sealing ring 8 in which the bottom end 10 of the top piece 9 is fixed.

The top piece 9 consists of a tubular body 11 which defines a chamber 12. The branch 13 is connected to the chamber 12 at right angles to the tubular body 11. An auxiliary line (not shown) may be connected to the branch 12 which leads, for example, to a dwelling. The upper end 14 is situated opposite the bottom end 10 of the top piece 9 and, in the illustrated position, is closed off by the screw cap 15. Near the upper end 14 of the chamber 12, there is first the gasket 16 (see Fig. Ia), followed by the introduction non-return valve 17 just below (see Fig. Ib). This introduction non-return valve 17 consists of a single part of flexible material and has an annular opening 18 which extends in the circumferential direction over the largest part to form an elastic pivot 19. This elastic pivot 19 carries the actual valve body 20 which bears sealingly against the gasket 16 on account of an overpressure in the chamber 12. On the other hand, the valve body 20 can be pushed open by pushing a tool which is to be described in more detail below into it after the screw cap 15 has been removed.

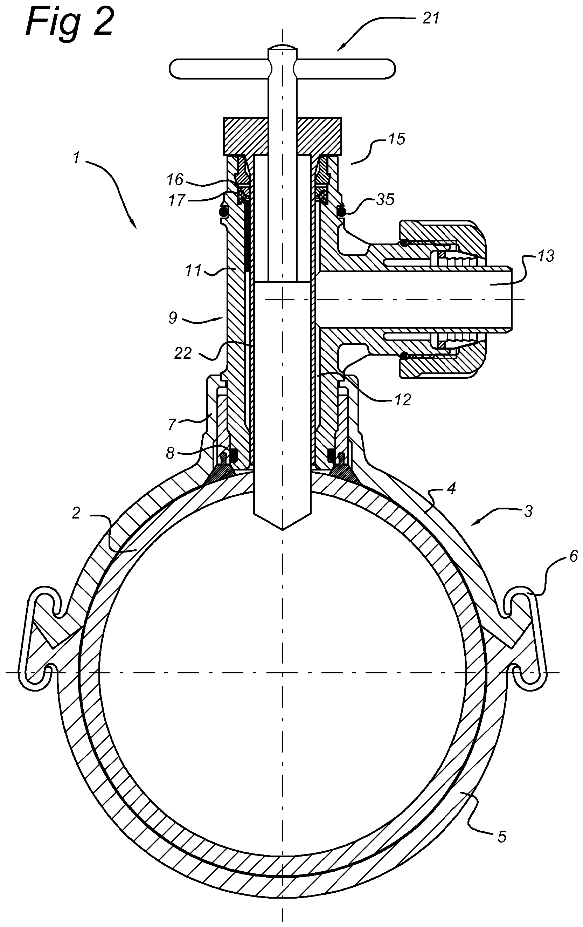

The drill tool 21 shown in Fig. 2 may be one of these tools. This drill tool 21 is rotatably and sealingly accommodated in a bush 22 which in turn bears sealingly against the gasket 16. As described above, this drill tool 21 is pushed through the gasket 16 together with the bush 22 once the screw cap 15 has been removed, in which case the valve body 20 is pivoted into the open position in Fig. 2. Subsequently, a hole 23 is drilled into the plastic pipe 2 in a known manner by means of the drill tool. As the drill tool 21 and the bush 22 are sealed with respect to the chamber 12 by the gasket 16, the hole 23 can be made while there is an overpressure in the plastic pipe 2.

After the hole 23 has been drilled, the drill tool 21 and the bush 22 are removed, in which case the introduction non-return valve 17, in particular the valve body 20 thereof, comes to rest against the gasket 16, thus preventing the overpressure from being able to escape from the plastic pipe 2. The fluid present in the plastic pipe 2 can thus flow directly into the pipe (not shown) which is connected to the branch 13.

A traditional top-piece device can be connected to a plastic pipe in the above-described manner. Such traditional top-piece devices are used in great numbers. In principle, these work well, but it is nevertheless possible that problems develop if the auxiliary line and/or the installation which is connected thereto becomes defective. In that case, an undesirably large fluid flow, such as a gas flow, may occur. It is also possible for the problem to occur that unauthorized changes are made to the installation which is connected to the auxiliary line, also resulting in the plastic pipe 2 discharging relatively large amounts of fluid. It is therefore desirable for a so-called pressure relief valve to be fitted in the top-piece device. However, replacing the already installed top-piece devices is problematic, as this would lead to relatively high costs due to the removal of the traditional top-piece device and the installation of a top-piece device with pressure relief valve.

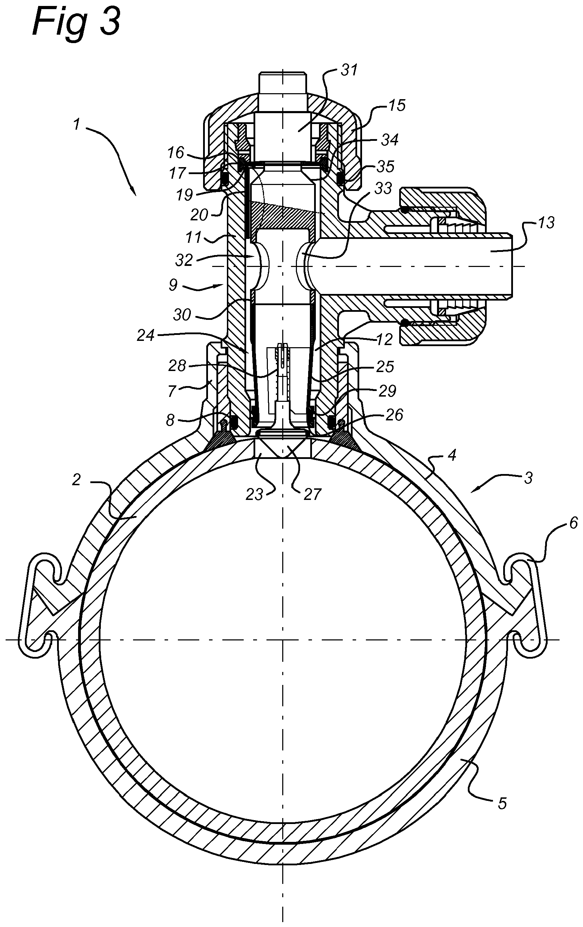

In order to find a solution to these problems, a pressure relief valve 24 is fitted in the chamber 12 of the top piece 9 in the top-piece device 1 according to the invention, as is illustrated in Fig. 3. This pressure relief valve 24 has a housing 25 with a valve seat 26 at the bottom end. Furthermore, the pressure relief valve 24 has a valve body 27 which, in the illustrated position, is open on account of the prestressing spring 28. The valve body 27 has a head which is shaped in such a manner that, at a certain current force and/or flow rate of the fluid flow from the plastic pipe 2 via the hole 23, said valve body 27 is pushed upwards counter to the prestress and against the seat 26. Thus, the supply of fluid to the branch is closed when the flow is too strong. By means of a sealing ring 29, the housing 25 of the pressure relief valve 24 is sealed with respect to the internal wall of the chamber 12.

In order to be able to fix the pressure relief valve 24 in the desired position in the chamber 12, the pressure relief valve 24 is suspended from the piece of pipe 30. This piece of pipe 30 has a head 31 which is in turn attached, for example in a releasable manner, to the screw cap 15. After the hole 23 has been made in the plastic pipe 2 in the above-described manner, and the drill tool 21, 22 has been removed from the chamber 12, this assembly 32 comprising of pressure relief valve 24, and piece of pipe 30 and screw cap 15 can then be fitted into or onto the chamber 12, respectively. To this end, the housing 25 of the pressure relief valve 24 and also the piece of pipe 30 are pushed through the gasket 16. The introduction non-return valve 17 is then opened, in which case in particular the valve body 20 is pushed to the open position, as is illustrated in Fig. 3. This may be carried out while an overpressure prevails in the plastic pipe 2 and in the chamber 12 since, during the introduction, the sealing is secured by the gasket 16. While it is possible in this case for some gas to escape, the amount will be very limited.

As the assembly 32 is gradually being introduced further, the screw cap 15 will eventually mate with the screw thread which is provided on the top piece 9 in such a manner that the chamber 12 is then sealed by the sealing ring 35 of this screw cap 15. In this position, the sealing by means of the gasket 16 is no longer required. In this connection, the piece of pipe 30 is provided with a constriction 34 which is situated at the location of the gasket 16. This constriction has an external diameter which is smaller than or is equal to the internal diameter of the gasket 16, in such a manner that the gasket 16 is now in a completely stress-free state. As a result thereof, the action of the gasket 16 can be ensured for a prolonged period of time, which is important if, for example, the assembly 32 has to be removed after some time.

In the wall of the piece of pipe 30, a number of holes 33 are provided which, in the illustrated exemplary embodiment, are situated at the location of the branch 13. Thus, fluid which flows into the piece of pipe 30 from the plastic pipe 2 when the pressure relief valve 24 is open can then enter the branch 13.

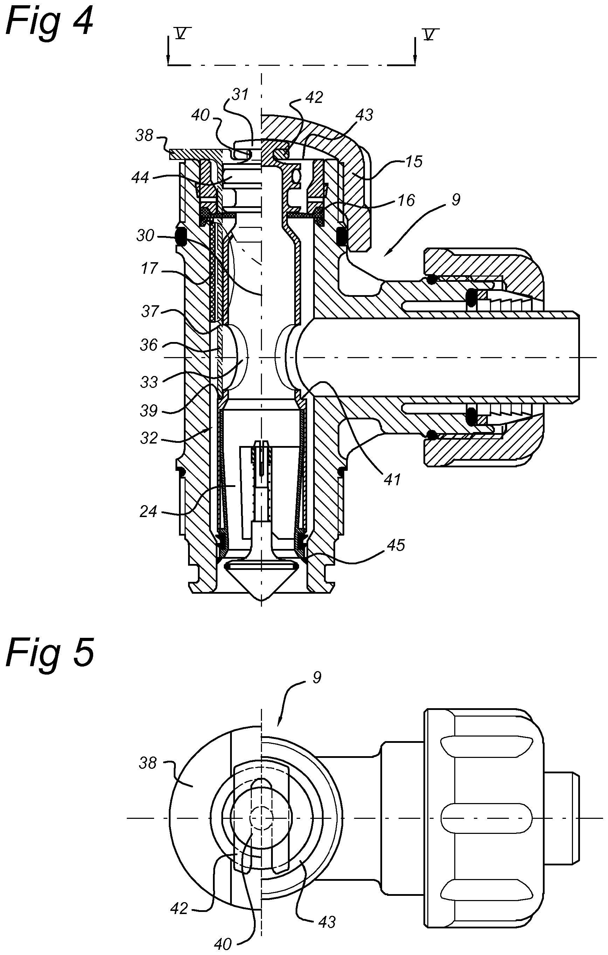

In the variant from Figs. 4 and 5, the top piece 9 not only contains the assembly 32 of pressure relief valve 24 and piece of pipe 30, but also the adaptor 36. The left side of Figs. 4 and 5 shows the adaptor 36 which is introduced after the screw cap 15 has been removed. The right side shows the situation without said adaptor. The adaptor 36 has a collar 38 and a cylindrical wall 37, the latter being pushed in between the wall of the chamber 12 and the assembly 32. In this case, the introduction non-return valve 17 is pushed still slightly further towards said wall, away from the assembly 32. The adaptor 36 cooperates sealingly with the gasket 16.

The piece of pipe 30 of the assembly 32 has a head 31 to which a clamp 42 is attached which rests on the upper boundary 43 of the chamber 12, thus fixing the assembly 32. This clamp 42 is removed before the adaptor 36 is pushed in. Thereafter, the clamp can be replaced again, in such a way that it also rests in the recess 40 of the collar 38. If desired, the bottom end of the assembly can rest on a stop 45 in the chamber 12. Incidentally, in the position of use, the assembly 32 is retained under the screw cap 15 as a result of the fact that the head 31 of the assembly 32 bears against it.

Under the head 31, a sealing ring 44 is arranged which seals the assembly 32 with respect to the internal surface of the cylindrical wall 37 of the adaptor 36. In the illustrated exemplary embodiment, the cylindrical wall 37 has a length which is such that if the collar 38 rests on the upper end 43 of the chamber 12, the wall 37 covers the holes 33 entirely. The bottom end 39 of the adaptor 36 then rests on the stop 41 of the piece of pipe 30.

In this situation, the assembly 32 can be pushed out of the chamber 12 without the introduction non-return valve 17 being touched in the process and thus the latter does not risk being damaged. If the assembly 32 were to be removed from the chamber 12 in direct contact with the introduction non-return valve 17, the latter could be pushed in and, for example, get caught behind the holes 33 and be carried along when the assembly 32 is moved upwards. Finally, the adaptor 36 can be removed. As this has a completely closed and smooth outer surface, the introduction non-return valve is not influenced negatively when the adaptor 36 is pushed upwards.

Incidentally, such an adaptor 36 can also be used with the variant from Figs. 1-3. In that case, the screw cap 15 has to cooperate with the assembly 32 in a releasable manner, so that the screw cap can be removed while the the assembly remains behind in the chamber 12.

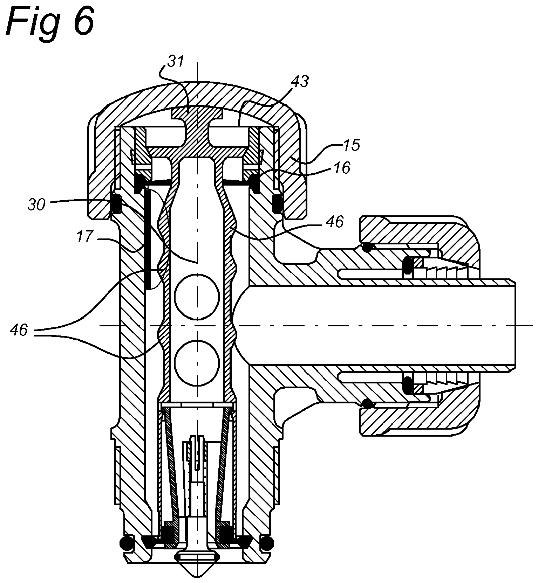

The variant shown in Fig. 6 has a piece of pipe 30, on the outer surface of which are annular protuberances 46. These protuberances facilitate guiding the piece of pipe along the gasket 16. These annular protuberances 46 also prevent the introduction non-return valve 17 from being pulled out when the pressure relief valve 24 and the piece of pipe 30 are being removed. The loss of the introduction non-return valve 17 or the loss of its function has to be prevented at all times, since there would otherwise be a free discharge of fluid.

Although a pressure relief valve consisting of a valve body with a shaped head has been described above, differently shaped valve bodies, for example having a spherical shape, can also be used.

### List of reference numerals

- 1.: Top-piece device
- 2.: Plastic pipe
- 3.: Saddle
- 4.: Upper ring part of saddle
- 5.: Bottom ring part of saddle
- 6.: Saddle clamp
- 7.: Saddle collar
- 8.: Sealing ring
- 9.: Top piece
- 10.: Bottom end of top piece
- 11.: Tubular body of top piece
- 12.: Chamber in tubular body
- 13.: Branch
- 14.: Upper end of top piece
- 15.: Screw cap
- 16.: Gasket
- 17.: Introduction non-return valve
- 18.: Annular opening
- 19.: Elastic pivot
- 20.: Valve body
- 21.: Drill tool
- 22.: Bush
- 23.: Hole in plastic pipe
- 24.: Pressure relief valve
- 25.: Housing of pressure relief valve
- 26.: Seat of pressure relief valve
- 27.: Valve body
- 28.: Prestress spring
- 29.: Sealing ring
- 30.: Piece of pipe
- 31.: Head of piece of pipe
- 32.: Assembly of pressure relief valve and piece of pipe
- 33.: Hole in piece of pipe
- 34.: Constriction in piece of pipe
- 35.: Sealing of screw cap
- 36.: Adaptor
- 37.: Cylindrical part of adaptor
- 38.: Adaptor collar
- 39.: Bottom end of adaptor
- 40.: Recess
- 41.: Stop of piece of pipe
- 42.: Clamp
- 43.: Upper end of chamber
- 44.: Sealing ring
- 45.: Stop in chamber
- 46.: Protuberance

## Claims

1. Top-piece device (1) for a plastic pipe (2) for transporting a fluid, comprising a saddle (3) which can be fitted on the plastic pipe (2) and a top piece (9) which cooperates with the saddle, which top piece has a chamber (12) with an outlet on the side (10) which is to be turned towards the plastic pipe, an introduction non-return valve (17) via which a tool (21, 22) can be introduced into the chamber, a gasket (16) for sealing said tool with respect to the chamber, a closing means (15) on that end (14) of the chamber which is situated opposite the outlet, a pressure relief valve (24) which is in an open position in the rest position and which can be brought to the closed position when a predetermined current force and/or pressure difference across the pressure relief valve is exceeded, and a branch (13) which is connected to the chamber (12), **characterised in that** the pressure relief valve (24) is situated in the chamber (12) and **in that** either the pressure relief valve (24) is suspended directly from the closing means (15) and the housing of the pressure relief valve has an external diameter which is greater than the internal diameter of the gasket (16), or the pressure relief valve is suspended from a piece of pipe (30) which is connected to the closing means (15) at one end and which supports the pressure relief valve (24) at the other end and which piece of pipe (30) has a nominal diameter which is greater than the internal diameter of the gasket (16).

2. Top-piece device (1) according to Claim 1, wherein the piece of pipe (30) has at least a lateral opening (33) in its wall, preferably at the location of the branch (13) and the pressure relief valve (24) is connected to the piece of pipe (30) and is sealed with respect to the chamber (12).

3. Top-piece device (1) according to one of the preceding claims, wherein the piece of pipe (30) has a constriction (34) at the location of the gasket (16), which constriction has an external diameter which is smaller than or equal to the internal diameter of the gasket and/or has at least a protuberance (46), such as an annular protuberance.

4. In combination, the top piece device according to one of Claims 1-3 and a pipe-shaped adaptor (36) in which that end of the piece of pipe (30) facing away from the pressure relief valve (24) can be sealingly accommodated, which adaptor (36) has a substantially constant cylindrical external shape with a diameter greater than the internal diameter of the gasket (16) and is intended for introducing the assembly (32) into the chamber (12) or removing it therefrom.

5. Combination according to Claim 4, wherein the piece of pipe (30) has an external stop (41) which faces downstream and the one end (39) of the adaptor (36) can be fitted against the stop.

6. Combination according to Claim 4 or 5, wherein that end of the adaptor (36) which faces away from the pressure relief valve (24) has an external collar (38) which can be fitted against that boundary (43) of the chamber (12) which faces away from the pressure relief valve (24).

7. Combination according to Claim 6, wherein the collar (38) of the adaptor (36) has a recess (40) which can be brought to the same level as that boundary (43) of the chamber (12) facing away from the pressure relief valve (24), and the piece of pipe (30) is provided with a support (42) which can be fitted against said recess and said boundary of the chamber.

8. Combination according to one of Claims 4-7, wherein that end of the piece of pipe (30) facing away from the pressure relief valve (24) has a sealing (44) which can be made to cooperate with the internal wall of the adaptor (36).

9. Method of fitting a top-piece device (1) according to one of the preceding claims 1-3 to a plastic pipe (2) comprising the following steps:
- fitting the saddle (3) and the top piece (9) on the plastic pipe (2),
- introducing a drill tool (21, 22) in the top piece (9) by opening the introduction non-return valve (17), which drill tool is sealed with respect to the gasket (16),
- making a hole (23) in the plastic pipe (2) by means of the drill tool (21, 22),
- removing the drill tool (21, 22) from the top piece (9) after the hole (23) has been made while closing the introduction non-return valve (17),
- introducing the assembly (32) according to one of Claims 4-5 while opening the introduction non-return valve (17), which assembly is sealed with respect to the gasket (16),
- attaching the assembly (32) to the top piece (9).

10. Method according to Claim 9, wherein the top-piece device (1) according to Claim 3 is used, comprising the following step:
- fitting the constriction (33) of the piece of pipe (30) at the location of the gasket (16), in such a manner that the gasket is in a stress-free state after the assembly has been fitted.

11. Method according to Claim 9 or 10 for removing the assembly (32) from the chamber (12) using the combination according to one of Claims 4-8, comprising the following steps:
- introducing the adaptor (36) into the chamber (12) and around the assembly (32) while displacing the open introduction non-return valve (17), which adaptor (36) is sealed with respect to the gasket (16),
- withdrawing the assembly (32) from the adaptor,
- subsequently removing the adaptor from the chamber (12),
- optionally subsequently installing a closing means (15) on the chamber (12).

## Patentansprüche

1. Aufsatzvorrichtung (1) für ein Kunststoffrohr (2) zum Transportieren eines Fluids, umfassend einen auf das Kunststoffrohr (2) aufsetzbaren Sattel (3) und einen mit dem Sattel zusammenwirkenden Aufsatz (9), der eine Kammer (12) mit einem Auslass auf der dem Kunststoffrohr zugewandten Seite (10), ein Einbringrückschlagventil (17), über welches ein Werkzeug (21, 22) in die Kammer eingebracht werden kann, eine Dichtung (16) zum Abdichten des Werkzeugs gegenüber der Kammer, ein an dem Auslass gegenüberliegenden Ende (14) der Kammer angeordnetes Verschlussmittel (15), ein Druckbegrenzungsventil (24), das in der Ruhestellung in einer Offenstellung vorliegt und welches in die Schließstellung gebracht werden kann, wenn eine vorbestimmte Strömungskraft und/oder Druckdifferenz über das Druckbegrenzungsventil überschritten wird, und eine mit der Kammer (12) verbundene Abzweigung (13) aufweist, **dadurch gekennzeichnet, dass** das Druckbegrenzungsventil (24) in der Kammer (12) angeordnet ist und dass entweder das Druckbegrenzungsventil (24) direkt an dem Verschlussmittel (15) aufgehängt ist und das Gehäuse des Druckbegrenzungsventils einen Außendurchmesser aufweist, der größer ist als der Innendurchmesser der Dichtung (16), oder das Druckbegrenzungsventil an einem Rohrstück (30) aufgehängt ist, das an einem Ende mit dem Verschlussmittel (15) verbunden ist und am anderen Ende das Druckbegrenzungsventil (24) stützt, wobei das Rohrstück (30) einen Nenndurchmesser aufweist, der größer ist als der Innendurchmesser der Dichtung (16).

2. Aufsatzvorrichtung (1) nach Anspruch 1, wobei das Rohrstück (30) zumindest eine seitliche Öffnung (33) in seiner Wandung aufweist, vorzugsweise an der Stelle der Abzweigung (13), und das Überdruckventil (24) mit dem Rohrstück (30) verbunden und gegenüber der Kammer (12) abgedichtet ist.

3. Aufsatzvorrichtung (1) nach einem der vorhergehenden Ansprüche, wobei das Rohrstück (30) an der Stelle der Dichtung (16) eine Einschnürung (34), deren Außendurchmesser kleiner oder gleich dem Innendurchmesser der Dichtung ist, und/oder mindestens eine Ausstülpung (46), wie eine ringförmige Ausstülpung, aufweist.

4. Kombination aus der Aufsatzvorrichtung nach einem der Ansprüche 1-3 und einem rohrförmigen Adapter (36), in dem das dem Druckbegrenzungsventil (24) abgewandte Ende des Rohrstücks (30) abdichtend aufgenommen werden kann, wobei der Adapter (36) eine im Wesentlichen konstante zylindrische Außengestalt mit einem Durchmesser aufweist, der größer ist als der Innendurchmesser der Dichtung (16), und dazu bestimmt ist, die Baugruppe (32) in die Kammer (12) einzubringen oder aus ihr zu entfernen.

5. Kombination nach Anspruch 4, wobei das Rohrstück (30) einen äußeren Anschlag (41) aufweist, der stromabwärts ausgerichtet ist, und das eine Ende (39) des Adapters (36) an dem Anschlag ansetzbar ist.

6. Kombination nach Anspruch 4 oder 5, wobei das dem Überdruckventil (24) abgewandte Ende des Adapters (36) einen Außenkragen (38) aufweist, der an der dem Überdruckventil (24) abgewandten Begrenzung (43) der Kammer (12) ansetzbar ist.

7. Kombination nach Anspruch 6, wobei der Kragen (38) des Adapters (36) eine Ausnehmung (40) aufweist, die auf die gleiche Höhe wie die dem Druckbegrenzungsventil (24) abgewandte Begrenzung (43) der Kammer (12) gebracht werden kann, und das Rohrstück (30) mit einer Abstützung (42) versehen ist, die gegen die Ausnehmung und die Begrenzung der Kammer angesetzt werden kann.

8. Kombination nach einem der Ansprüche 4-7, wobei das dem Überdruckventil (24) abgewandte Ende des Rohrstücks (30) eine Dichtung (44) aufweist, die mit der Innenwand des Adapters (36) zusammenwirken kann.

9. Verfahren zum Anbringen einer Aufsatzvorrichtung (1) nach einem der vorhergehenden Ansprüche 1-3 an einem Kunststoffrohr (2), umfassend die folgenden Schritte:
- Aufsetzen des Sattels (3) und des Aufsatzes (9) auf das Kunststoffrohr (2),
- Einführen eines Bohrwerkzeugs (21, 22) in den Aufsatz (9) durch Öffnen des Einbringrückschlagventils (17), wobei das Bohrwerkzeug gegenüber der Dichtung (16) abgedichtet ist,
- Herstellen eines Lochs (23) in dem Kunststoffrohr (2) mittels des Bohrwerkzeugs (21, 22),
- Entfernen des Bohrwerkzeugs (21, 22) von dem Aufsatz (9), nachdem das Loch (23) hergestellt wurde, während das Einbringrückschlagventil (17) geschlossen wird,
- Einbringen der Baugruppe (32) nach einem der Ansprüche 4-5 unter Öffnen des Einbringrückschlagventils (17), wobei die Baugruppe gegenüber der Dichtung (16) abgedichtet ist,
- Befestigen der Baugruppe (32) an dem Aufsatz (9).

10. Verfahren nach Anspruch 9, wobei die Aufsatzvorrichtung (1) nach Anspruch 3 verwendet wird, mit folgendem Schritt:
- Ansetzen der Einschnürung (33) des Rohrstücks (30) an der Stelle der Dichtung (16), so dass sich die Dichtung nach dem Ansetzen der Baugruppe in einem spannungsfreien Zustand befindet.

11. Verfahren nach Anspruch 9 oder 10 zum Entfernen der Baugruppe (32) aus der Kammer (12) unter Verwendung der Kombination nach einem der Ansprüche 4-8, umfassend die folgenden Schritte:
- Einbringen des Adapters (36) in die Kammer (12) und um die Baugruppe (32) herum, während das offene Einbringrückschlagventil (17) verschoben wird, wobei der Adapter (36) gegenüber der Dichtung (16) abgedichtet ist,
- Herausziehen der Baugruppe (32) aus dem Adapter,
- anschließendes Entfernen des Adapters aus der Kammer (12),
- gegebenenfalls anschließendes Anbringen eines Verschlussmittels (15) an der Kammer (12).

## Revendications

1. Dispositif de pièce supérieure (1) pour un tuyau en plastique (2) pour transporter un fluide, comprenant une selle (3) qui peut être mise en place sur le tuyau en plastique (2) et une partie supérieure (9) qui coopère avec la selle, laquelle pièce supérieure comporte une chambre (12) avec une sortie sur le côté (10) qui doit être tourné vers le tuyau en plastique, un clapet anti-retour d'introduction (17) via lequel un outil (21, 22) peut être introduit dans la chambre, un joint d'étanchéité (16) pour étanchéifier ledit outil par rapport à la chambre, des moyens de fermeture (15) sur l'extrémité (14) de la chambre qui est située à l'opposé de la sortie, un clapet de décharge (24) qui est dans une position ouverte dans la position de repos et qui peut être amenée à la position fermé lorsqu'une force de courant et/ou une différence de pression prédéterminée à travers le clapet de décharge est dépassée, et une branche (13) qui est reliée à la chambre (12), **caractérisé en ce que** le clapet de décharge (24) est situé dans la chambre (12) et **en ce que** le clapet de décharge (24) est suspendu directement aux moyens de fermeture (15) et le boîtier du clapet de décharge a un diamètre externe qui est supérieur au diamètre interne du joint d'étanchéité (16), ou le clapet de décharge est suspendu à une pièce de tuyau (30) qui est relié aux moyens de fermeture (15) à une extrémité et qui supporte le clapet de décharge (24) à l'autre extrémité et laquelle pièce de tuyau (30) a un diamètre nominal qui est supérieur au diamètre interne du joint d'étanchéité (16).

2. Dispositif de pièce supérieure (1) selon la revendication 1, dans lequel la partie de tuyau (30) a au moins une ouverture latérale (33) dans sa paroi, de préférence à l'emplacement de la branche (13) et le clapet de décharge (24) est relié à la partie de tuyau (30) et est rendu étanche par rapport à la chambre (12).

3. Dispositif de pièce supérieure (1) selon l'une quelconque des revendications précédentes, dans lequel la pièce de tuyau (30) a un rétrécissement (34) à l'emplacement du joint d'étanchéité (16), lequel rétrécissement a un diamètre externe qui est inférieur ou égal au diamètre interne du joint d'étanchéité et/ou a au moins une protubérance (46), telle qu'une protubérance annulaire.

4. Dispositif de pièce supérieure selon l'une des revendications 1 à 3 et un adaptateur en forme de tuyau (36) en combinaison, l'extrémité de la pièce de tuyau (30) opposée au clapet de décharge (24) pouvant être reçue de manière étanche, lequel adaptateur (36) a une forme extérieure cylindrique sensiblement constante avec un diamètre supérieur au diamètre intérieur du joint d'étanchéité (16) et est destiné à introduire l'ensemble (32) dans la chambre (12) ou à l'en retirer.

5. Combinaison selon la revendication 4, dans laquelle la pièce de tuyau (30) présente une butée extérieure (41) tournée vers l'aval et l'une des extrémités (39) de l'adaptateur (36) peut être mise en place contre la butée.

6. Combinaison selon la revendication 4 ou 5, dans laquelle cette extrémité de l'adaptateur (36) qui est au clapet de décharge (24) présente une collerette extérieure (38) qui peut être mise en place contre la limite (43) de la chambre (12) qui est opposée au clapet de décharge (24).

7. Combinaison selon la revendication 6, dans laquelle la collerette (38) de l'adaptateur (36) comporte un évidement (40) qui peut être amené au même niveau que la limite (43) de la chambre (12) opposée au clapet de décharge (24), et la pièce de tuyau (30) est pourvue d'un support (42) qui peut être mis en place contre ledit évidement et ladite limite de la chambre.

8. Combinaison selon l'une quelconque des revendications 4 à 7, dans laquelle l'extrémité de la pièce de tuyau (30) opposée au clapet de décharge (24) présente une étanchéité (44) qui peut être amenée à coopérer avec la paroi intérieure de l'adaptateur (36).

9. Procédé de mise en place d'un dispositif de pièce supérieure (1) selon l'une quelconque des revendications précédentes 1 à 3 sur un tuyau en plastique (2) comprenant les étapes suivantes :
- mettre en place la selle (3) et la pièce supérieure (9) sur le tuyau en plastique (2),
- introduire un outil de perçage (21, 22) dans la pièce supérieure (9) en ouvrant le clapet anti-retour d'introduction (17), lequel outil de perçage est rendu étanché par rapport au joint d'étanchéité (16),
- faire un trou (23) dans le tuyau en plastique (2) au moyen de l'outil de perçage (21, 22),
- retirer l'outil de perçage (21, 22) de la pièce supérieure (9) après que le trou (23) a été réalisé tout en fermant le clapet anti-retour d'introduction (17),
- introduire l'ensemble (32) selon l'une des revendications 4 à 5 lors d'une ouverture du clapet anti-retour d'introduction (17), lequel ensemble est rendu étanche par rapport au joint d'étanchéité(16),
- fixer l'ensemble (32) à la pièce supérieure (9).

10. Procédé selon la revendication 9, dans lequel le dispositif de pièce supérieure (1) selon la revendication 3 est utilisé, comprenant l'étape suivante :
- mettre en place le rétrécissement (33) de la pièce de tuyau (30) à l'emplacement du joint d'étanchéité (16), de telle sorte que le joint d'étanchéité soit dans un état sans contrainte après que l'ensemble a été mis en place.

11. Procédé selon la revendication 9 ou 10 pour retirer l'ensemble (32) de la chambre (12) en utilisant la combinaison selon l'une des revendications 4 à 8, comprenant les étapes suivantes :
- introduire l'adaptateur (36) dans la chambre (12) et autour de l'ensemble (32) tout en déplaçant le clapet anti-retour d'introduction ouvert (17), lequel adaptateur (36) est rendu étanche par rapport au joint d'étanchéité (16),
- retirer l'ensemble (32) à partir de l'adaptateur,
- retirer ensuite l'adaptateur à partir de la chambre (12),
- installer éventuellement par la suite des moyens de fermeture (15) sur la chambre (12).
